# EUROPÄISCHE PATENTSCHRIFT

(11) **EP 2 304 372 B1**
(45) Veröffentlichungstag und Bekanntmachung des Hinweises auf die Patenterteilung: **15.08.2012**
(21) Anmeldenummer: 09761517.3
(22) Anmeldetag: 13.06.2009
(51) Int. Cl.: F28F 25/06, B05B 1/34

(54) **FLUIDKÜHLEINRICHTUNG FÜR INSBESONDERE KÜHLTÜRME**
FLUID COOLING SYSTEM PARTICULARLY FOR COOLING TOWERS
DISPOSITIF DE REFROIDISSEMENT DE FLUIDE, EN PARTICULIER POUR TOURS DE REFROIDISSEMENT

(30) Priorität: 13.06.2008 DE 202008007932 U
(43) Veröffentlichungstag der Anmeldung: 06.04.2011
(73) Patentinhaber: CTS Cooling Tower Solutions GmbH, 40627 Düsseldorf (DE)
(72) Erfinder: STRENG, Andreas, 40627 Düsseldorf (DE)
(74) Vertreter: Brinkmann, Stefan Ulrich
(86) Internationale Anmeldenummer: PCT/EP2009/004270
(87) Internationale Veröffentlichungsnummer: WO 2009/149954

(56) Entgegenhaltungen:
- EP-A- 1 340 954
- DE-C- 557 325
- GB-A- 525 500
- GB-A- 191 225 641

## Beschreibung

Die Erfindung betrifft eine Fluidkühleinrichtung für insbesondere Kühltürme, mit einer Flüssigkeitsverteileinrichtung nach dem Oberbegriff des Anspruchs 1. So eine Einrichtung ist aus EP 1340 954 bekannt.

Kühltürme und so auch Fluidkühleinrichtungen für Kühltürme sind aus dem Stand der Technik an sich bekannt.

In Fluidkühleinrichtungen wird in der Regel eine Flüssigkeit an einem Gas zum Zwecke der Energieübertragung vorbeigeführt. Dabei ist die Kühlung entweder der Flüssigkeit oder des Gases beabsichtigt. Umgekehrt kann aber auch ein Aufheizen eines der beiden aneinander vorbeigeführten Fluide bei prinzipiell gleichem Aufbau der Fluidkühleinrichtung beabsichtigt sein. Es handelt sich dann um eine Fluidheizeinrichtung. Um in jedem Fall eine möglichst gute Wärmeübertragung zwischen den beiden Fluiden erreichen zu können, ist stets eine Flüssigkeitsverteileinrichtung vorgesehen, mittels welcher die Flüssigkeit möglichst gleichmäßig über den Einrichtungsquerschnitt des Apparates verteilt wird. Sofern die Flüssigkeit nicht vollständig innerhalb der Einrichtung verdunstet oder verdampft wird, kann die verbleibende Flüssigkeit in einer geeigneten Auffangvorrichtung gesammelt werden.

Kühltürme dienen der Abkühlung eines Fluids, beispielsweise einer Flüssigkeit. Bei dem abzukühlenden Fluid handelt es sich häufig um Wasser. Es sind aber auch Säurekühltürme gebräuchlich, d.h. eine Säure wird im Kühlturm mittels Umgebungsluft ebenfalls nach dem Prinzip der Verdunstungskühlung gekühlt. Es können aber auch andere Flüssigkeiten oder Gase innerhalb eines Kühlturms zur Abkühlung gebracht werden. Eine weitere bedeutende Ausführungsform sind Kühleinrichtungen oder Kühltürme, in denen mittels Wasser ebenfalls nach dem Prinzip der Verdunstungskühlung als Prozeßziel Luft, z.B. Umgebungsluft gekühlt und/oder befeuchtet wird.

Im folgenden wird eine der am häufigsten in der Praxis vorgefundene Bauart eines Kühltürms näher beschrieben. Diese Kühltürme kühlen Flüssigkeiten - sehr häufig Wasser- mittels Umgebungsluft und verfügen vorzugsweise über Kühleinbauten, die zur Verbesserung der Abkühlung des Wassers dienen. Es sind aber auch Kühltürme ohne Kühleinbauten im Einsatz, um eine ständige Verschmutzung und Verstopfungen dieser Kühleinbauten bei verschmutzten Flüssigkeiten oder starken Abscheidungen beim Kühlprozeß zu vermeiden.

Die zu kühlende Flüssigkeit wird oberhalb der Kühleinbauten mittels einer Flüssigkeitsverteileinrichtung versprüht und rieselt an den Kühleinbauten entlang, und zwar der Schwerkraft folgend nach unten. Die Kühleinbauten werden z.B. im Gegenstrom zur abzukühlenden Flüssigkeit von Luft zum Zwecke der Kühlung durchströmt. Infolge des Kontakts der abzukühlenden Flüssigkeit mit der Kühlluft innerhalb der Kühleinbauten kommt es zur bestimmungsgemäßen Abkühlung der abzukühlenden Flüssigkeit.

Der vorbeschriebene und aus dem Stand der Technik an sich bekannte Aufbau eines auch als Naturzugkühlturm bezeichneten Kühlturms ist beispielsweise mit der DE 10 2006 005 114 A1 offenbart.

In einer anderen Ausführungsform wird im Kühlturm statt der Kühleinbauten ein Wärmetauscher eingesetzt, der mit Wasser aus einer oberhalb des Wärmetauschers angeordneten Verteileinrichtung besprüht wird. Die Wärme des durch den Wärmetauscher strömenden Fluids wird auf das kühlere Rieselwasser, das den Wärmetauscher durchrieselt und seine Außenflächen umspült, übertragen. Die in den Kühlturm eingeleitete Umgebungsluft nimmt die Wärme vom Rieselwasser mittels Verdunstungskühlung auf. Prozeßziel ist hier die effiziente Kühlung eines Fluids (Wasser, Dampf, Öl, Kältemittel u.s.w.) im geschlossenen Kühlkreislauf, ohne dass dieses innere Fluid verschmutzt wird oder an die Umgebung gelangt. Eine solche aus dem Stand der Technik bekannte Vorrichtung ist beispielsweise als Verdunstungskühlturm mit der EP 0 687 878 B1 offenbart.

Es gilt grundsätzlich, dass sich die Gleichmäßigkeit der Flüssigkeitsverteilung positiv auf die erreichbare Abkühlung auswirkt. Eine gleichmäßigere Flüssigkeitsbeaufschlagung im Kühlturm reduziert auch den Druckverlust der Kühlluft. Es wird deshalb angestrebt, eine möglichst gleichmäßige Flüssigkeitsverteilung zu erzielen.

Aus dem Stand der Technik sind Flüssigkeitsverteileinrichtungen bekannt geworden, die zum Zwecke einer möglichst vergleichmäßigten Flüssigkeitsverteilung über sogenannte "Tellerdüsen" verfügen. Derartige "Tellerdüsen" sind beispielsweise aus der DE 690 04 554 T2 bekannt geworden.

Gemäß der Ausgestaltung nach der DE 690 04 554 T2 verfügt eine "Tellerdüse" über ein Ansatzrohr, das an ein Verteilerrohr der Flüssigkeitsverteileinrichtung angeschlossen ist. Im bestimmungsgemäßen Verwendungsfall strömt aus dem Ansatzrohr die abzukühlende Flüssigkeit frei aus. In Höhenrichtung unterhalb des Ansatzrohraustritts ist in einem gewissen Abstand zum Ansatzrohr eine nach Art eines Tellers ausgebildete Platte angeordnet. Dieser Abstand muß in der Regel mit 0,8 m bis 1,2 m ausgeführt werden und ist damit relativ groß. Im bestimmungsgemäßen Verwendungsfall tritt die abzukühlende Flüssigkeit aus dem Ansatzrohr aus und trifft auf die auch als "Prallplatte" zu bezeichnende Platte der "Tellerdüse".

Der vertikal auf die Prallplatte auftreffende Flüssigkeitsstrahl wird in Strähnen, Filme und Tropfen in großer Unregelmäßigkeit zerteilt. Die aufgerissene und zerteilte Flüssigkeitsmenge wird von der Prallplatte im Bogen zu allen Seiten gelenkt. Es bilden sich filmartige Schirme aus, die relativ große Sprühweiten von mehreren Metern Entfernung erreichen. Allerdings bleiben unterhalb dieser Schirme weite Bereiche trocken.

Da in Kühltürmen in der Regel eine Vielzahl dieser Tellerdüsen zur Verteilung der Flüssigkeit erforderlich sind und diese im geringeren Abstand von z.B. 1 m im Raster voneinander angeordnet werden, wird eine Überlappung der Sprühbilder benachbarter Tellerdüsen erreicht. Die Überlappungen mindern die sehr schlechten Flüssigkeitsverteilungen der einzelnen Tellerdüsen. Die mit dieser Art der Verteileinrichtung erreichten Resultate und die damit einhergehenden Abkühlungen (Kühldaten) wurden bisher als akzeptabel eingeschätzt. Es verbleibt aber das grundsätzliche Problem der unzureichenden Gleichmäßigkeit der Flüssigkeitsverteilung über dem gesamten Kühlturmquerschnitt.

Aus dem Stand der Technik sind des Weiteren sogenannte "Dralldüsen" bekannt geworden, so zum Beispiel aus der DE 78 23 070 U1. Bei einer "Dralldüse" handelt es sich um eine mit einer Dralleinrichtung ausgerüstete Düse, wobei die Dralleinrichtung in Form einer Drallplatte, eines Drallblechs, eines Drallzapfens und/oder dergleichen ausgebildet sein kann. Die aus der DE 78 23 070 U1 bekannte "Dralldüse" verfügt über eine Dralleinrichtung in Form eines Zapfens. Dieser ist mittig innerhalb der Düsenkammer angeordnet und fluchtet mittig zur Austrittsöffnung, so dass die Düsenkammer, der Drallzapfen sowie die Austrittsöffnung auf einer gemeinsamen Achse liegen. Sinn und Zweck des Zapfens ist es, der aus der "Dralldüse" ausgestoßenen Flüssigkeit ein im Wesentlichen kegelförmiges Profil zu geben.

"Dralldüsen" und so auch die aus der DE 78 23 070 U1 vorbekannte Düse haben den Nachteil, dass es aufgrund von Verschmutzungen leicht zu Düsenverstopfungen kommen kann. "Dralldüsen" bedürfen deshalb einer regelmäßigen und mitunter einer häufigen Kontrolle und Reinigung, was arbeitsintensiv und damit kostenaufwendig ist. Darüber hinaus bedingen die Dralleinrichtungen von "Dralldüsen" einen hohen Druckverlust im bestimmungsgemäßen Verwendungsfall, so dass entsprechend hohe Ausgangsdrücke erforderlich sind. Die damit verbundene hohe Pumpenergie, die größere Pumpenbaugröße, etc. führen zu deutlichen Mehrkosten für die Gesamtanlage. Daher wird vor allem bei Kraftwerken, aber auch bei Chemieanlagen und Stahlwerken, die durch sehr große Wasserumlaufmengen und insgesamt große Kühlanlagen gekennzeichnet sind, auf den Einsatz solcher Dralldüsen verzichtet.

Obgleich sich insbesondere die aus dem Stand der Technik vorbekannten "Tellerdüsen" im alltäglichen Praxiseinsatz bewährt haben, besteht Verbesserungsbedarf. So erbringen die aus dem Stand der Technik vorbekannten "Tellerdüsen" keine hinreichend gute Wasserverteilung. Es bedarf ferner in nachteiliger Weise einer vergleichsweise großen Sprühhöhe, das heißt eines vergleichsweise großen Abstandes zwischen den "Tellerdüsen" und den Kühleinbauten, oder Wärmetauschern.

Ausgehend vom Vorbeschriebenen ist es die **Aufgabe** der Erfindung, eine Fluidkühleinrichtung der vorgenannten Art dahingehend weiterzuentwickeln, dass unter Vermeidung der vorerläuterten Nachteile eine möglichst gleichmäßige Flüssigkeitsverteilung erreicht wird.

Zur **Lösung** dieser Aufgabe wird mit der Erfindung vorgeschlagen eine Fluidkühleinrichtung für insbesondere Kühltürme, mit einer Flüssigkeitsverteileinrichtung, die eine Mehrzahl von an einem Zulaufrohr angeschlossenen Verteilerrohre aufweist, die mit tangential angesetzten Vollkegeldüsen ausgerüstet sind, wobei eine jede Vollkegeldüse ein Düsengehäuse, das eine rotationssymmetrisch ausgebildete Düsenkammer bereitstellt, einen in die Düsenkammer einmündenden Anschlussstutzen, einen der Düsenkammer in Strömungsrichtung nachgeordneten und eine Austrittsöffnung definierenden Düsenmund sowie einen Gehäusedeckel für die Düsenkammer aufweist, wobei der Gehäusedeckel auf seiner der Düsenkammer zugewandten Innenseite in die Düsenkammer hineinragende Fortsätze trägt, wobei der Anschlussstutzen zur Rotationshochachse der Düsenkammer im rechten Winkel und versetzt hierzu ausgerichtet ist und wobei die Austrittsöffnung in Richtung auf den Anschlussstutzen versetzt zur Rotationshochachse der Düsenkammer ausgebildet ist.

Die erfindungsgemäße Fluidkühleinrichtung zeichnet sich durch eine im Besonderen ausgestaltete Flüssigkeitsverteileinrichtung aus. Diese Flüssigkeitsverteileinrichtung verfügt über eine Mehrzahl von Verteilerrohren. Diese sind an eine gemeinsame Hauptverteilleitung angeschlossen, die wiederum von einem Zulaufrohr gespeist wird. Es ist bevorzugt, dass die Verteilerrohre im gleichmäßigen Abstand zueinander ausgerichtet sind.

Die Verteilerrohre sind mit Vollkegeldüsen ausgerüstet, die an die Verteilerrohre tangential angesetzt sind. Jede Vollkegeldüse verfügt über ein Düsengehäuse, welches eine Düsenkammer bereitstellt, die mit Blick auf ihren Querschnitt rotationssymmetrisch und zylindrisch ausgebildet ist.

Zwecks Wassereinführung in die Düse ist ein Anschlussstutzen vorgesehen, der bevorzugterweise einstückig mit dem Düsengehäuse ausgebildet ist. Der Anschlussstutzen mündet tangential in die Düsenkammer, wobei letztere mit Bezug auf die Rotationshochachse der Düsenkammer im rechten Winkel und außermittig versetzt hierzu ausgerichtet ist. Ein über den Anschlussstutzen tangential eingeleiteter Wasserstrahl tritt also außermittig und im rechten Winkel zur senkrecht nach unten angeordneten Austrittsöffnung in die Düsenkammer ein, infolge dessen es zu einer Rotation- oder Drallbewegung kommt, und zwar ohne den Einsatz eines die Flüssigkeitsströmung versperrenden oder einengenden Dralleinsatzes oder dergleichen. Die Düsenkonstruktion weist daher durchgängig große freie Durchgangsquerschnitte für die Flüssigkeitsströmung auf, so dass im langjährigen industriellen Dauerbetrieb eine stärkere Verschmutzung oder gar Verstopfung der Düsen vermieden wird. Die genannten Betriebsprobleme sind mit erheblichen Leistungseinbußen bis zum Komplettausfall der Kühlanlage verbunden, was bei der erfindungsgemäßen Ausgestaltung vermieden wird.

Das über den Anschlussstutzen in das Düsengehäuse tangential eingeleitete Wasser wird aufgrund der rechtwinkligen und außermittigen Anordnung des Anschlußstutzens zur Rotationshochachse der Düsenkammer in eine Rotationsbewegung versetzt, um 90° umgelenkt und verlässt die Düsenkammer durch den sich der Düsenkammer in Strömungsrichtung anschließenden Düsenmund, der eine Austrittsöffnung definiert, und zwar in einer Rotations- bzw. Drallbewegung, die sich aufgrund der vorbeschriebenen Ausgestaltung ergibt.

Der dem Düsenmund gegenüberliegende Deckel des Düsengehäuses schließt die Düsenkammer nach oben hin ab. Die Deckelfläche kann zusammen mit dem Düsengehäuse auch einstückig ausgebildet sein. Der Deckel schließt vorteilhaft mittels Bajonettverschluß und eingelegter O-Ringdichtung mit dem am oberen Rand entsprechend ausgeformten Gehäusekörper dicht ab.

Der Gehäusedeckel weist nach Innen in die Düsenkammer ragende Fortsätze, auch Aufsätze genannt, auf, die in geeigneter Weise die tangential in die Düsenkammer einströmende Flüssigkeit von oben tangiert. Hierdurch wird die in der Düsenkammer erzeugte rotationssymmetrische Flüssigkeitsströmung zur Bildung einer Vollkegelströmung beim Austritt aus dem Düsenmund angeregt. Die Vollkegelströmung ist vorteilhaft für die Gleichmäßigkeit der von der Düse erzeugten Flüssigkeitsverteilung.

Die Aufsätze des Gehäusedeckels sind gleichförmig und regelmäßig mit relativ großen Abständen von z.B. 20mm zueinander angeordnet. Eine Verstopfung der Zwischenabstände wird hierdurch vermieden. Der Deckel ist leicht demontierbar, reinigbar und wieder montierbar und stellt somit ein sehr praktisches Konstruktionsdetail dar. Bevorzugterweise sind die Aufsätze im Durchschnitt dreieckförmig ausgebildet, wodurch der vorbeschriebene Dralleffekt unterstützt wird.

Der besondere Vorteil der erfindungsgemäßen Ausgestaltung liegt darin, dass bei gleichzeitig gleichmäßiger Wasserverteilung ein nur geringer Druckverlust auftritt, womit die Flüssigkeitsverteileinrichtung energieverlustarm arbeitet.

Aus dem Stand der Technik vorbekannte Kegeldüsen verfügen zur Erzeugung eines Wasserdralls über ein Drallblech, eine Drallplatte oder eine dergleichen Dralleinrichtung. Eine solche Dralleinrichtung zieht in nachteiliger Weise Druckverluste nach sich, so dass zur Erzielung eines wunschgemäßen Ausgangsdruckes entsprechend hohe Eingangsdrücke vorgehalten werden müssen. Dies ist hinsichtlich der erfindungsgemäßen Flüssigkeitsverteileinrichtung nicht erforderlich. Diese wird im Bereich von nur 0,04 bar bis 0,3 bar über Normaldruck betrieben - bevorzugt bei sehr niedrigen 0,1 bar und kann insofern als Niederdruck-Verteileinrichtung bezeichnet werden.

Die erfindungsgemäße Fluidkühleinrichtung erweist sich darüber hinaus insofern als vorteilhaft, als dass eine gleichmäßige Flüssigkeitsverteilung erreicht werden kann, das heißt die Sprühverteilung über das gesamte Sprühbild gleichmäßig ist. Als Folge dieser mit der erfindungsgemäßen Einrichtung erreichten gleichmäßigen Verteilung kann eine gleichmäßige Wasserbeaufschlagung eines Kühlturms erfolgen, so dass in vorteilhafter Weise eine wunschgemäß gleichmäßige und damit hohe Abkühlung des mittels der erfindungsgemäßen Einrichtung ausgebrachten Flüssigkeit ermöglicht ist.

Die erfindungsgemäße Ausgestaltung bringt ferner den Vorteil einer vergleichsweise geringen Bauhöhe. So erlaubt die erfindungsgemäße Ausgestaltung eine Anordnung der Vollkegeldüsen in einer Sprühhöhe von 400 mm bis 800 mm, vorzugsweise von 500 mm bis 700 mm oberhalb der zu besprühenden Querschnittsfläche. Damit wird eine im Vergleich zum Stand der Technik kompaktere Bauform der gesamten Fluidkühleinrichtung erreicht.

Es ist in diesem Zusammenhang bevorzugterweise ferner vorgesehen, dass die Verteilerrohre der Fluidverteileinrichtung im gleichmäßigen Abstand zueinander ausgerichtet sind und dass die daran angebauten Tangentialvollkegeldüsen in den gleichen Abständen wie die Verteilrohre zueinander positioniert sind. Somit ergibt sich vorteilhaft ein Raster oder Gitter mit gleichen Abständen der Düsen in beide Achsrichtungen zueinander. Die Düsen erreichen somit eine sehr gleichmäßige Flüssigkeitsverteilung in ihren Kernbereichen. In den Randbereichen überlappen sich die Sprühbilder der jeweils benachbarten Düsen zu einem weitestgehend vergleichmäßigten Gesamtsprühbild. Eine weitestgehend gleichmäßige Berieselung des Kühlturmquerschnittes wird so sichergestellt, wobei zur Erzielung eines optimierten Kühlergebnisses vorgesehen ist, dass die Kegeldüsen einen Sprühkegeldurchmesser von 500 mm bis 1.200 mm, vorzugsweise von 700 mm bis 900 mm erzeugen. Die durch die Düsen- und Verteilerrohranordnung gebildete Gitterstruktur sollte zur Erzielung eines vergleichmäßigten Sprühergebnisses also derart ausgestaltet sein, dass benachbarte Düsen einen Abstand von ca. 700 bis 900 mm in beide Achsrichtungen zueinander aufweisen.

Die Vollkegeldüsen verfügen gemäß einem weiteren Merkmal der Erfindung innenseitig über eine Oberflächenrauheit von 1 µm bis 12 µm, vorzugsweise von 5 µm bis 10 µm. Untersuchungen haben ergeben, dass eine gewisse Oberflächenrauigkeit dazu beiträgt, die bevorzugte rotationssymmetrische Flüssigkeitsströmung zu erhalten, den Sprühwinkel nicht zu klein werden zu lassen und die Flüssigkeitsverteilung möglichst zu vergleichmäßigen. Besonders gute Ergebnisse der Gleichmäßigkeit und der Sprühweite konnten bei einer innenseitigen Oberflächenrauigkeit von ca. 10 µm erzielt werden. Zur Erzielung bestimmter Oberflächenrauigkeiten kann beispielsweise vorgesehen sein, die Spritzgussform zur Herstellung der Kegeldüsen entsprechend vorzubehandeln, beispielsweise durch Sandstrahlen.

Mit der Erfindung wird insgesamt eine Fluidkühleinrichtung vorgeschlagen, die dank ihrer Ausgestaltung eine gleichmäßigere Flüssigkeitsverteilung erreicht, was unmittelbar zu einer verbesserten Leistungsfähigkeit des gesamten Kühlturmes führt. Infolge der gleichmäßigeren Wasserverteilung werden die in Gravitationsrichtung unterhalb der Flüssigkeitsverteilung angeordneten Kühleinbauten oder Wärmetauscher gleichmäßiger berieselt, was zu einem effizienteren Wärme- und Stoffaustausch mit dem im Gegenstrom durch die Kühleinbauten geführten Kühlluft führt.

Die Anordnung der Vollkegeldüsen an den jeweiligen Verteilerrohren erfolgt gemäß einem weiteren Merkmal der Erfindung unter jeweiliger Zwischenanordnung eines Adapters. Der Adapter ist als Anschlussstutzen ausgebildet, der verteilerrohrseitig einen Absatz mit Rastzungen aufweist. Dabei ist bevorzugterweise vorgesehen, dass der Absatz in seiner Anschlusskontur an die bevorzugten Rohrdurchmesser des zugehörigen Verteilerrohres angepasst ist. Das Verteilrohr erhält zur Aufnahme des Adapters an der jeweiligen

Gitterposition ein mit relativ enger Toleranz zu fertigendes Bohrloch (mit Plustoleranz).

Weiterhin wird der Adapter bevorzugt aus Kunststoff, z.B. aus Polypropylen gefertigt, wobei aus Festigkeitsgründen dieser mit Glasfasern verstärkt werden kann. Zur Erreichung von genügend Elastizität der Rasterzungen darf der Glasfaseranteil nicht zu hoch gewählt werden. Es wird so ein formschlüssiger Anschluß des Adapters an dem zugehörigen Verteilerrohr erreicht.

Auf der anderen Seite wird der Adapter, der hier ein Innengewinde aufweist, auf das Außengewinde des Anschlußstutzens der Vollkegeldüse aufgeschraubt. Im Ergebnis ergibt sich beidseitig ein insgesamt flüssigkeitsdichter, drucksicherer, lagesicherer und dauerhafter Anschluß der Vollkegeldüse am zugehörigen Verteilerrohr. Ungewollte Leckagen, etwaige Schwierigkeiten bei der Montage bzw. Demontage im Reparaturfall sowie lageunsichere Verbindungen von Vollkegeldüsen einerseits und Verteilerrohren andererseits können so vermieden werden.

Zur bestimmungsgemäßen Anordnung einer Vollkegeldüse an einem Verteilerrohr wird in einem ersten Montageschritt zunächst der Adapter in die zugehörige Öffnung des Verteilerrohres eingesteckt. Verteilerrohrseitig verfügt der Adapter über Rastzungen. Diese tauchen durch die im Verteilerrohr ausgebildete Montageöffnung ein und verrasten durch Hinterschnitt an der Verteilerrohrwand. Kegeldüsenseitig wird der Anschlussstutzen der Kegeldüse in den Adapter eingeführt und aufgeschraubt. Infolge dieses Aufschraubens werden die Rastzungen des Adapters geweitet, das heißt radial auseinandergedrückt, womit sich ein sicherer Halt des Adapters gegenüber dem Verteilerrohr und damit auch der Vollkegeldüse gegenüber dem Verteilerrohr ergibt. Die Absatzkontur des Adapters ist dabei an den Rohrdurchmessers des Verteilerrohres angepasst, so dass sich der Absatz formschlüssig an die Außenoberfläche des Verteilerrohres anschmiegt.

Dabei zeigen die Figuren
- Fig. 1: in einer schematischen Schnittdarstellung einen Kühlturm mit einer darin angeordneten Flüssigkeitsverteilung nach der Erfindung;
- Fig. 2: in einer schematischen Draufsicht von oben eine Flüssigkeitsverteilung;
- Fig. 3: die Flüssigkeitsverteilung nach Fig. 2 in einer geschnittenen Seitenansicht gemäß Schnittlinie III-III nach Fig. 2;
- Fig. 3a: eine Detailansicht gemäß Detailausschnitt IIIa-IIIa nach Fig. 2;
- Fig. 4: in teilgeschnittener Seitenansicht eine Vollkegeldüse der erfindungsgemäßen Fluidkühleinrichtung;
- Fig. 5: in einer schematisch-perspektivischen Darstellung das Düsengehäuse der Vollkegeldüse nach Fig. 4;
- Fig. 6: in einer Seitenansicht das Düsengehäuse nach Fig. 5;
- Fig. 7: in einer geschnittenen Ansicht das Düsengehäuse nach Fig. 6 gemäß Schnittlinie VII-VII nach Fig. 6;
- Fig. 8: in einer Draufsicht von oben das Düsengehäuse nach Fig. 5;
- Fig. 9: in einer schematisch-perspektivischen Darstellung den Deckel einer Vollkegeldüse;
- Fig. 10: in einer Draufsicht von unten den Deckel nach Fig. 9;
- Fig. 11: in einer geschnittenen Seitenansicht den Deckel nach Fig. 9 gemäß Schnittlinie XI-XI nach Fig. 10;
- Fig. 12: in einer schematisch-perspektivischen Darstellung einen Adapter zur Anordnung einer Vollkegeldüse an einem Verteilerrohr;
- Fig. 13: in einer Seitenansicht den Adapter nach Fig. 12;
- Fig. 14: in einer geschnittenen Seitenansicht den Adapter nach Fig. 12 gemäß Schnittlinie XIV-XIV nach Fig. 13 und
- Fig. 15: in einer diagrammhaften Darstellung die Sprühverteilung einer Vollkegeldüse.

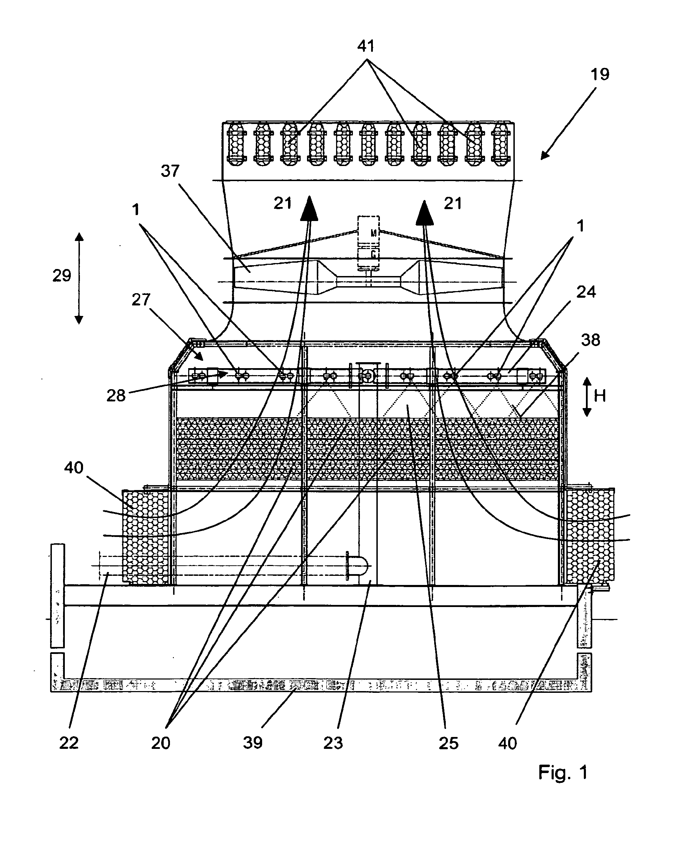

Fig. 1 zeigt einen aus dem Stand der Technik an sich bekannten Kühlturm 19 in schematischer Darstellung. Der Kühlturm 19 ist mit einer Fluidkühleinrichtung 27 nach der Erfindung ausgerüstet.

Die Fluidkühleinrichtung 27 verfügt über eine Flüssigkeitsverteilung 28 einerseits und beispielhaft über Kühleinbauten 20 andererseits. In Höhenrichtung 29 ist die Flüssigkeitsverteilung 28 oberhalb der Kühleinbauten 20 bzw. oberhalb einer gleichmäßig mit Flüssigkeit zu beaufschlagenden Querschnittsfläche 38 angeordnet, wie die Darstellung nach Fig. 1 erkennen lässt. Die Querschnittsfläche 38 fällt im gezeigten Ausführungsbeispiel mit der oberen Oberfläche der Kühleinbauten 20 zusammen.

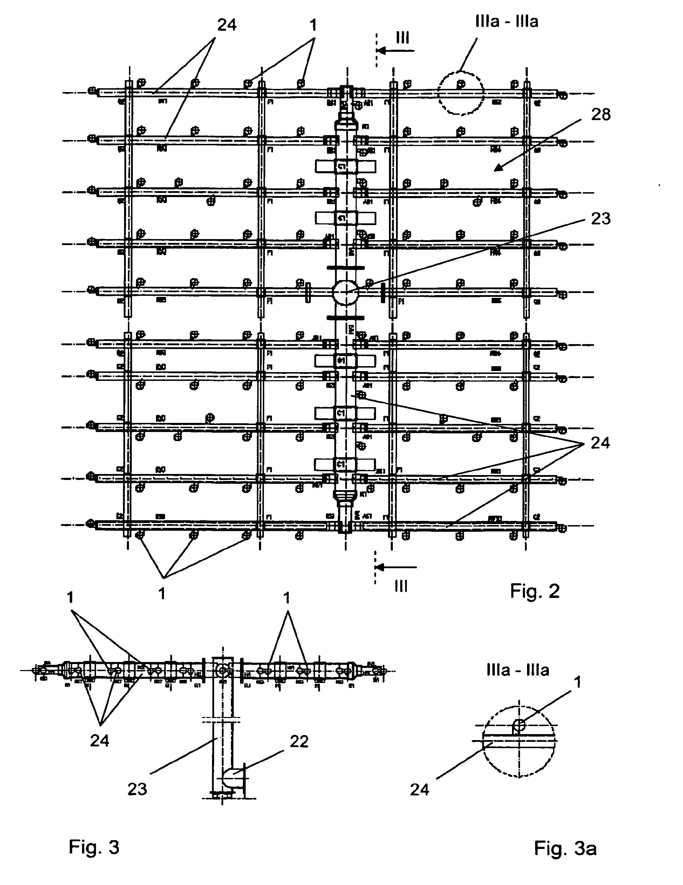

Die Flüssigkeitsverteilung 28 verfügt über eine Mehrzahl von Verteilerrohren 24, die an ein gemeinsames Zulaufrohr 23 flüssigkeitsseitig angeschlossen sind. Bevorzugterweise sind die Verteilerrohre 24 gleichmäßig zueinander ausgerichtet, wie sich insbesondere aus den Darstellungen nach den Fign. 2, 3 und 3a ergibt.

Durch den Kühlturm 19 wird mittels eines saugend angeordneten Axialventilators 37 als Kühlmedium Umgebungsluft in Entsprechung der Pfeile 21 mit Bezug auf die Zeichnungsebene nach Fig. 1 von unten nach oben geführt. Im Zuge des Hindurchführens der Luft durch den Kühlturm 19 passiert die Luft die hier beispielhaft gezeigten Kühleinbauten 20, die im gezeigten Ausführungsbeispiel dreilagig ausgebildet.

Das mittels des Kühlturmes 19 abzukühlende Flüssigkeit, beispielsweise Wasser, wird über eine Zuführleitung 22 in das Zulaufrohr 23 eingeleitet. Von dort aus gelangt es zu den Verteilerrohren 24, die zum Zwecke des Flüssigkeitsaustritts mit tangential angesetzten Vollkegeldüsen 1 ausgerüstet sind, was insbesondere die Detaildarstellung nach Fig. 3a erkennen lässt. Die erfindungsgemäßen Tangentialvollkegeldüsen bieten den Vorteil, durch ihre seitliche Anordnung an den Verteilerrohren 24 die Bau- und Wasserfallhöhe im Bereich zwischen Wasserverteilebene einerseits bis zur Ebene der Kühleinbautenoberkante 38 andererseits einsparend zu reduzieren. Die gesamte Fluidkühleinrichtung kann damit kompakter ausgestaltet werden. Bevorzugterweise beträgt die Sprühhöhe H, das heißt der Abstand zwischen den Austrittsöffnungen der Vollkegeldüsen 1 und der oberen Kante der Kühleinbauten 20 beispielsweise 600 mm. Das gleichmäßig über den Kühleinbauten 20 verteilte Warmwasser 25 durchrieselt diese im hier gezeigten Fall im Gegenstrom zur von unten nach oben geförderten Kühlluft 21. Infolge des mit der Kühlluft im Kontakt stehenden Rieselwassers spricht man bei diesem Kühlverfahren, das mit der dargestellten speziellen Kühlturmausführung realisiert wird, vom offenen Kühlkreislauf.

Das so gekühlte Wasser tropft aus den Kühleinbauten 20 ab und wird in der Wassersammelwanne 39 aufgefangen und von dort zu den zu kühlenden Anlagen weitergeführt.

Weiterhin weist die hier beispielhaft gezeigte Ausführung eines Kühlturms Schalldämpfer 40 und 41 an den Lufteintritten und an den Luftaustritten auf.

Die Besonderheiten der erfindungsgemäßen Fluidkühleinrichtung 27 liegen in der durch die Flüssigkeitsverteilung 28 bedingten gleichmäßigen Sprühverteilung bei gleichzeitiger Energieeinsparung, die durch den geringen Druckverlust innerhalb der Fluidkühleinrichtung 27 begründet ist sowie durch die Robustheit der Anlage im jahrelangen Betrieb (wartungsarm und reparaturunanfällig). Gegenüber herkömmlichen Fluidkühleinrichtungen zeichnet sich die erfindungsgemäße Fluidkühleinrichtung durch ihren insgesamt verbesserten Wirkungsgrad aus. Weiterhin ist von Vorteil, dass im Zusammenhang mit der erfindungsgemäßen Fluidkühleinrichtung 27 Vollkegeldüsen zum Einsatz kommen, die einen Betrieb ohne den Einsatz von strömungseinengenden Dralltellern, Wirbelerzeugern und dergleichen ermöglichen, womit eine Verstopfung der Düsen grundsätzlich vermieden ist. Hierdurch wird die immer wieder beobachtete Leistungseinbuße am Kühlturm infolge von mehr oder weniger starken Verstopfungen der Wasserverteildüsen vermieden, die bis zum Ausfall des Kühlturms führen können.

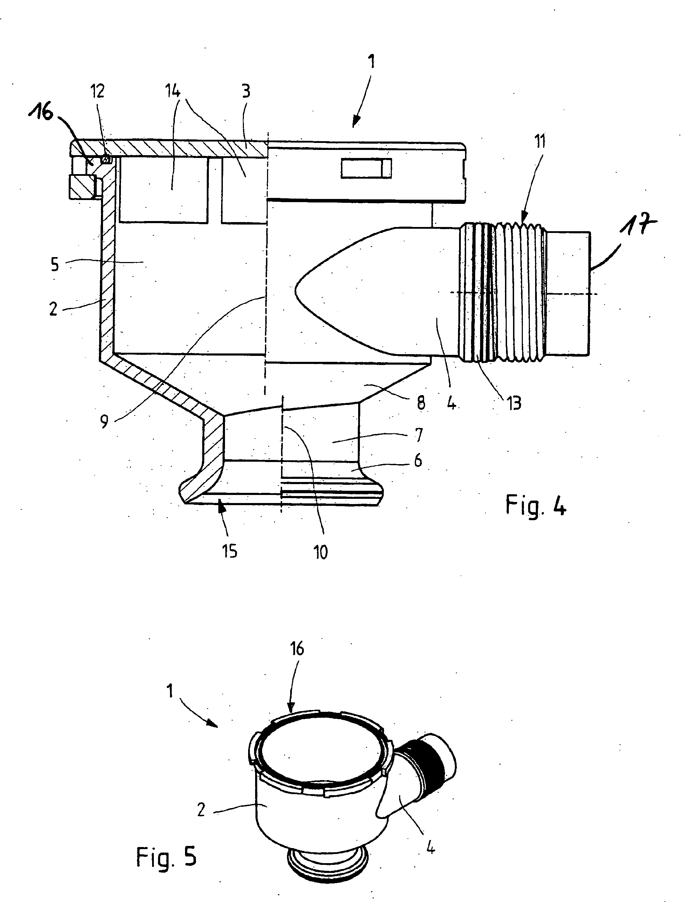

Eine im Zusammenhang mit der erfindungsgemäßen Fluidkühleinrichtung 27 zum Einsatz kommende Vollkegeldüse 1 ist in den Fign. 4 bis 11 näher dargestellt.

Wie die Darstellung nach Fig. 4 erkennen lässt, umfasst die Vollkegeldüse 1 ein Düsengehäuse 2. Mit Bezug auf die Zeichnungsebene nach Fig. 4 ist das Düsengehäuse 2 oberseitig mittels eines Deckels 3 verschlossen. Zwecks wasserdichter Verbindung von Düsengehäuse 2 und Deckel 3 ist eine Dichtung in Form eines O-Rings 12 vorgesehen, der in eine entsprechende Nut eines Verschlussrings 16 des Düsengehäuses 2 eingesetzt ist. In einer alternativen Ausgestaltung können die Düsengehäuse 2 und der Gehäusedeckel 3 auch einstückig ausgebildet sein.

Das Düsengehäuse 2 stellt eine Düsenkammer 5 bereit. In diese mündet ein Anschlussstutzen 4 ein, der bevorzugterweise einstückig mit dem Düsengehäuse 2 ausgebildet ist und als Spritzgussteil aus Kunststoff, z.B. aus glasfaserverstärktem Polypropylen, besteht. Desgleichen besteht der Deckel 3 bevorzugterweise als Spritzgußteil ebenfalls aus Kunststoff. Der Anschlussstutzen 4 stellt ein Gewinde 11 bereit, welches der Verbindung des Anschlussstutzens 4 mit einem Verteilerrohr 24 für die Wasserzuführung dient. Für einen dichtenden Abschluss zwischen einem in der Fig. 4 nicht dargestellten Verteilerrohr 24 und dem Anschlussstutzen 4 dient u.a. eine Dichtung in Form eines O-Rings 13.

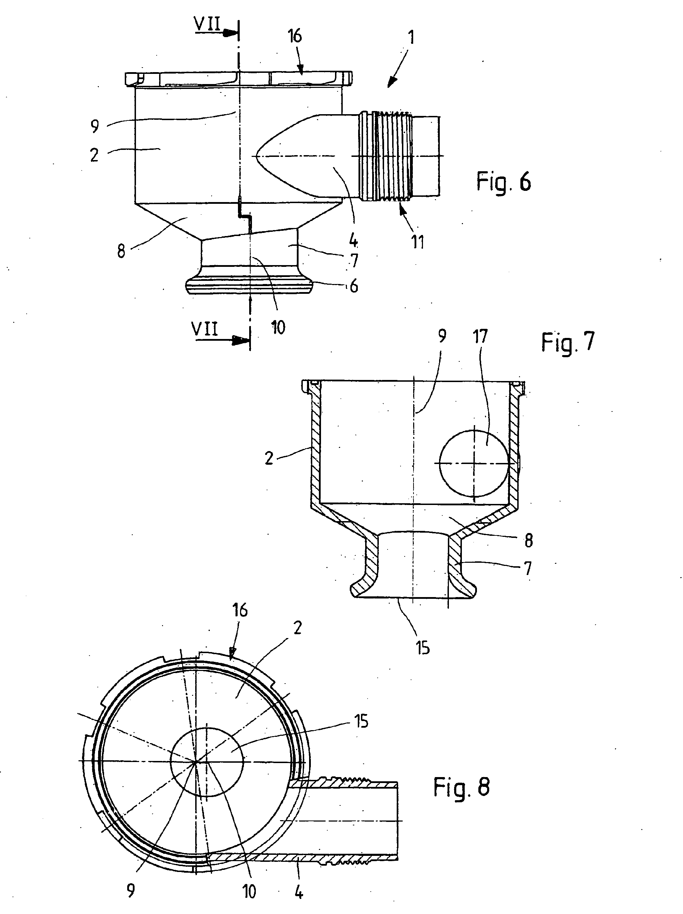

Die Düsenkammer 5 ist rotationssymmetrisch ausgebildet, wie insbesondere die Darstellungen nach den Fign. 6 und 7 erkennen lassen. Die Rotationssymmetrie der Düsenkammer 5 ergibt sich hinsichtlich der Rotationshochachse 9 der Düsenkammer 5, wie sie sich auch aus der Darstellung nach Fig. 4 ergibt. Mit Bezug auf diese Rotationshochachse 9 ist der Anschlussstutzen 4 rechtwinklig ausgerichtet, wie sich insbesondere aus der Darstellung nach den Fign. 6 und 8 ergibt. Der Anschlussstutzen 4 ist darüber hinaus versetzt zur Rotationshochachse 9 ausgebildet, wie sich dies im Besonderen aus der Darstellung nach den Fign. 7 und 8 ergibt.

Die im rechten Winkel stehende und zur Rotationsachse 9 versetzt ausgebildete Ausrichtung des Anschlussstutzens 4 sorgt dafür, dass über den Anschlussstutzen 4 eingeleitetes und über die Eintrittsöffnung 17 in die Düsenkammer 5 gelangendes Wasser, in eine Drall-, das heißt Rotationsbewegung um die Rotationshochachse 9 der Düsenkammer 5 versetzt wird. Dieser Sachzusammenhang kann insbesondere der Darstellung nach den Fign. 7 und 8 entnommen werden.

Das in der Düsenkammer 5 befindliche Wasser verlässt die Düse 1 über die vom Düsenmund 6 bereitgestellte Austrittsöffnung 15. Dieser Sachzusammenhang lässt sich insbesondere der Darstellung nach den Fign. 4 und 6 entnehmen.

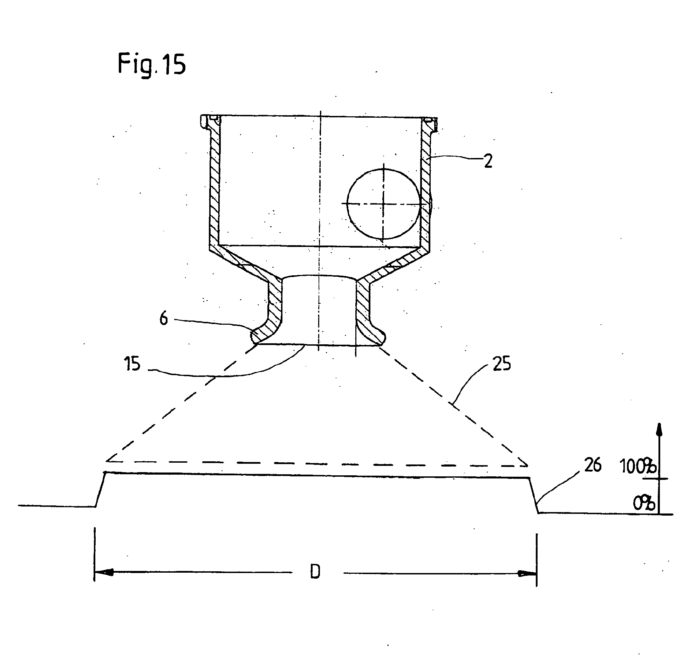

An die Düsenkammer 5 schließt sich in Strömungsrichtung eine Verjüngung 8 an, die in einen Düsenhals 7 übergeht, an den sich schließlich der Düsenmund 6 anschließt. Wie sich insbesondere aus der Darstellung nach Fig. 4 ergibt, weitet sich der Düsenmund 6 mit Bezug auf die Zeichnungsebene nach Fig. 4 nach unten hin auf. Hierdurch ergibt sich ein kegelförmiges Sprühbild 25, wie dieses beispielsweise in Fig. 1 und Fig. 15 im Schnitt als Vollkegel dargestellt ist.

Wie sich insbesondere aus der Darstellung nach Fig. 4 entnehmen lässt, ist die Mittelachse 10 der Austrittöffnung 15 in Richtung auf den Anschlussstutzen 4 zur Rotationshochachse 9 versetzt. Die Austrittsöffnung 15 ist also nicht zentrisch zur Düsenkammer 5 ausgebildet, was sich auch aus der Darstellung nach Fig. 8 ergibt. Aufgrund der etwas versetzten Ausrichtung von Mittelachse 10 der Austrittsöffnung 15 einerseits und der Rotationshochachse 9 der Düsenkammer 5 andererseits wird das Erzielen einer wunschgemäßen Gleichverteilung des in Tropfen aus der Düse 1 austretenden Wassers unterstützt.

Wie sich insbesondere aus der Darstellung nach Fig. 6 entnehmen lässt, ist der Übergang zwischen Verjüngung 8 und Düsenhals 7 zur oberen Randkante des Düsengehäuses 2 geneigt ausgebildet, das heißt die obere Randkante des einstückig mit der Verjüngung 8 ausgebildeten Düsenhalses 7 steht unter einem Neigungswinkel zur oberen Randkante des Düsengehäuses 2. Auch diese Ausgestaltung dient einer wunschgemäß zu erreichenden gleichmäßigen Wasserverteilung.

Die über die Verjüngung 8 trichterförmig in den Düsenhals 7 einmündende Düsenkammer 5 nimmt im bestimmungsgemäßen Verwendungsfall das über den Anschlussstutzen 4 in die Düse 1 eingeleitete Wasser auf. Aufgrund der vorbeschriebenen Ausgestaltung wird das über den Anschlussstutzen 4 in die Düsenkammer 5 eingeleitete Wasser innenumfangsseitig der Düsenkammer 5 in diese eingeführt, was zu einer Rotationsbewegung bzw. Drallbewegung des Wassers in Form eines Strudels führt, und zwar mit Bezug auf die Zeichnungsebene nach Fig. 8 rechtssinnig. Das auf diese Weise in die Düse 1 eingebrachte Wasser verlässt selbige über die Austrittsöffnung 15, wobei sich aufgrund der Drallbewegung ein vollkegelförmiges Sprühbild 25 mit einer gleichmäßigen Sprühverteilung 26 gemäß Fig. 15 ergibt. Dabei unterstützen sowohl die schräg verlaufende Randkante des Düsenhalses 7 als auch die versetzt zueinander ausgestaltete Anordnung von Mittelachse 10 und Rotationshochachse 9 eine gleichmäßige Sprühverteilung 26, wie sich diese aus der diagrammhaften Darstellung nach Fig. 15 ergibt, die eine gleichmäßige Flüssigkeitsverteilung unterhalb der Vollkegeldüse 1 von 100% zeigt.

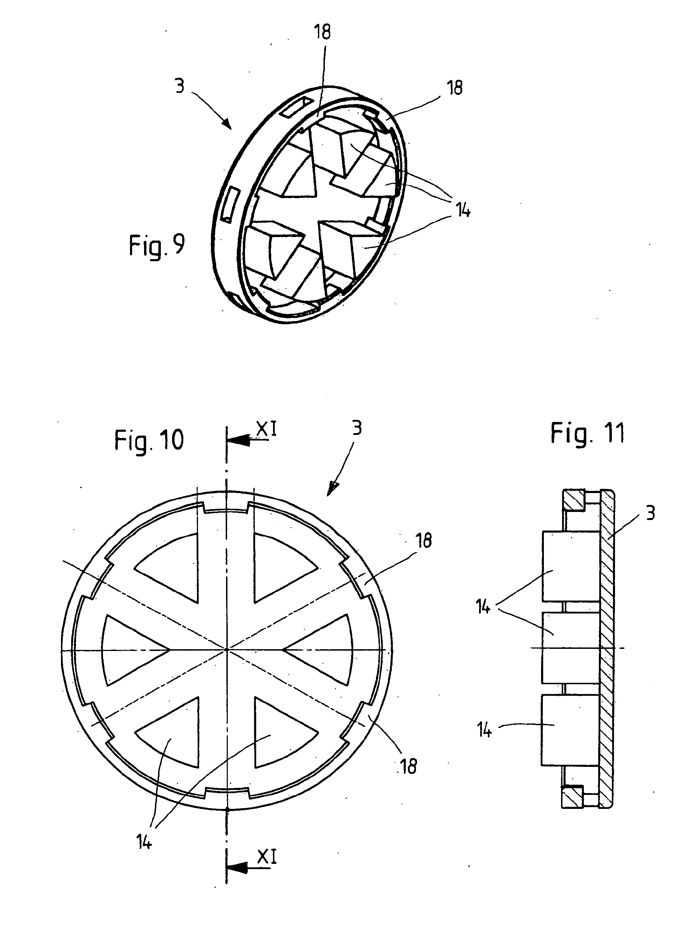

Zum Zwecke des Verschließens des mit Bezug auf die Zeichnungsebene beispielsweise nach Fig. 7 oben offenen Düsengehäuses 2 dient ein Deckel 3, wie er beispielhaft in Fig. 9 dargestellt ist.

Zum Zwecke eines sicheren Verschlusses verfügt das Düsengehäuse 2 oberseitig über einen einstückig mit dem Düsengehäuse 2 ausgebildeten Verschlussring 16. Dieser Verschlussring 16 stellt Ausnehmungen bereit, in die Verschlussteile 18 des Deckels 3 nach Art des Bajonettverschlusses eingreifen können. Außerdem ist in den Rand des Düsengehäuses 2, das den Verschlußring 16 ausbildet, eine Nut zur Aufnahme des O-Ringes 12 eingearbeitet. Nach dem Einlegen des O-Ringes 12 und einem Verdrehen des Deckels 3 gegenüber dem Düsengehäuse 2 hintergreifen die am Deckel 3 ausgebildeten Verschlussteile 18 am Verschlussring 16 entsprechend ausgebildete Rampen, so dass ein dichtes und sicheres Anpressen des Deckels 3 an das Düsengehäuse 2 erfolgt.

Wie insbesondere die Darstellung nach den Fign. 9 und 11 erkennen lässt, verfügt der Deckel 3 innenseitig, das heißt auf seiner der Düsenkammer 5 zugewandten Seite über Aufsätze (Fortsätze) 14, die im Querschnitt dreieckförmig ausgebildet sind. Diese Aufsätze (Fortsätze) 14 tangieren die in die Düsenkammer einströmende Flüssigkeit von oben und unterstützen die Strömungsdynamik in einer Art und Weise, dass sich die im bestimmungsgemäßen Verwendungsfall in der Düsenkammer 5 einstellenden rotationssymmetrische Flüssigkeitsströmung zu einer Vollkegelströmung beim Austritt aus dem Düsenmund ausbildet.

Die Aufsätze 14 im Deckelboden sind gleichförmig und regelmäßig mit relativ großen Abständen zueinander angeordnet, um eine Verstopfung der Zwischenabstände zu vermeiden. Der Deckel ist insgesamt leicht montier- und reinigbar.

Das Düsengehäuse 2 weist innenseitig bevorzugterweise eine bestimmte Oberflächenrauigkeit auf. Hierdurch ergibt sich eine nochmals verbesserte Vergleichmäßigung im Sprühbild. Es ist in diesem Zusammenhang eine Oberflächenrauigkeit von ca. 10 µm bevorzugt.

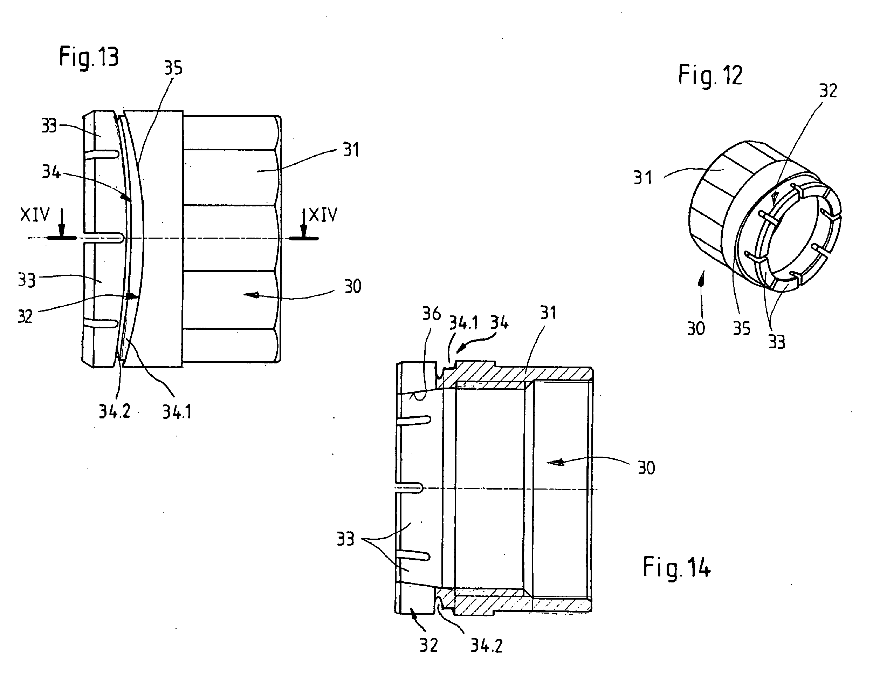

Zur Anordnung einer Düse 1 an einem Verteilerrohr 24 dient ein Adapter 30, wie er in den Fign. 12, 13 und 14 in unterschiedlichen Ansichten dargestellt ist.

Der Adapter 30 ist nach Art eines Anschlussringes 31 ausgebildet. Er verfügt verteilerrohrseitig über einen Absatz 32, der Rastzungen 33 trägt. Im endmontierten Zustand greift der Adapter 30 mit seinem Absatz 32 in eine verteilerrohrseitig vorgesehene und mit Toleranz zu fertigende Montageöffnung ein, wobei der Adapter 30 mittels der vom Absatz 32 getragenen Rastzungen 33 gegenüber dem Verteilerrohr verrastet. Bevorzugterweise ist der Adapter mit einer Anschlusskontur 35 ausgerüstet, die an die bevorzugten Rohrdurchmesser des zugehörigen Verteilerrohrs 24 angepasst ist. Auf der anderen Seite wird der Adapter, der hier ein Innengewinde aufweist, auf das Außengewinde 11 des Anschlußstutzens der Vollkegeldüse aufgeschraubt. Im Ergebnis ergibt sich beidseitig ein insgesamt flüssigkeitsdichter, drucksicherer, lagesicherer und dauerhafter Anschluß der Vollkegeldüse am zugehörigen Verteilerrohr.

Zwecks Anordnung einer Vollkegeldüse 1 an einem Verteilerrohr 24 ist in die vorgesehene Öffnung des Verteilerrohrs 24 zunächst der Adapter 30 bis zum Einrasten in die hierfür vorgesehene Nut 34 einzuführen, und zwar derart, dass die Rastzungen 33 durch die Öffnung in das Innere des Verteilerrohres 24 hineinragen. Alsdann ist die Düse anderenseits in den Adapter 30 einzuführen und einzudrehen, und zwar derart weit, dass es zu einer Aufweitung der Rastzungen 30, das heißt zu einem radialen Ausweiten der Rastzungen 33 kommt. Um dies zu erreichen, sind die Rastzungen 33 innenseitig des Adapters 30 mit einer Anlaufschräge 36 ausgerüstet. Gegen diese Anlaufschräge 36 fährt der Anschlussstutzen 4 der zugehörigen Vollkegeldüse 1 randseitig auf, was dann zu dem vorbeschriebenen radialen Ausweiten der Rastzungen 33 führt.

Bevorzugterweise weist die Nut 34 einen ersten Nutabschnitt 34.1 und einen zweiten Nutabschnitt 34.2 auf, wobei der zweite Nutabschnitt 34.2 tiefer als der erste Nutabschnitt 34.1 ausgebildet ist. Im montierten Zustand werden die Rastzungen 33 des Adapters 30 vom Nutabschnitt 34.1 der Nut 34 gehalten, so dass eine kraftübertragende Verbindung zwischen Verteilerrohr 24 einerseits und Adapter 30 andererseits ausgebildet ist. Der Nutabschnitt 34.1 kann insofern auch als Haltenut oder Halteabschnitt für den Adapter 30 bezeichnet werden.

Um die radiale Ausweitung der Rastzungen 33 im bestimmungsgemäßen Verwendungsfall zu unterstützen, weisen die Fußabschnitte der Rastzungen 33 den zweiten Nutabschnitt 34.2 auf, wie diese beispielhaft in Fig. 13 eingezeichnet ist. Die Ausbildung der tiefergehenden Nut 34.2 bewirkt eine Materialreduzierung im Fußbereich der Rastzungen 33, so dass hierdurch ein quasi-Gelenk für jede Rastzunge 33 geschaffen wird, was ein Verschwenken der Rastzungen 33 erleichtert. Insofern kann der zweite Nutabschnitt 34.2 als Montage- oder Hilfsnut bezeichnet werden.

Im verschwenkten, das heißt radial aufgeweiteten Zustand hintergreifen die Rastzungen 33 die im Verteilerrohr 24 ausgebildete Öffnung, so dass eine kraftschlüssige Anbindung erfolgt, die eine dichte und lagesichere Anordnung der Vollkegeldüse 1 am zugehörigen Verteilerrohr 24 ermöglicht.

Der Abstand der Kegeldüsen 1 zu den Kühleinbauten 20, das heißt die Sprühhöhe H und der Sprühkegeldurchmesser D sind aufeinander abzustimmen, so dass im Endergebnis eine optimierte Sprühverteilung, das heißt eine vergleichmäßigte Beaufschlagung der Kühleinbauten 20 mit der zu kühlenden Flüssigkeit erfolgt.

### Bezugszeichenliste

- 1: Vollkegeldüse
- 2: Düsengehäuse
- 3: Gehäusedeckel
- 4: Anschlussstutzen
- 5: Düsenkammer
- 6: Düsenmund
- 7: Düsenhals
- 8: Verjüngung
- 9: Rotationshochachse
- 10: Mittelachse
- 11: Gewinde
- 12: O-Ring
- 13: O-Ring
- 14: Fortsatz (Aufsatz)
- 15: Austrittsöffnung
- 16: Verschlussring
- 17: Eintrittsöffnung
- 18: Verschlussteil
- 19: Kühlturm
- 20: Kühleinbauten
- 21: Luft
- 22: Zuführleitung
- 23: Zulaufrohr
- 24: Verteilerrohr
- 25: Sprühbild
- 26: Sprühverteilung
- 27: Fluidkühleinrichtung
- 28: Flüssigkeitsverteileinrichtung
- 29: Höhenrichtung
- 30: Adapter
- 31: Anschlussring
- 32: Absatz
- 33: Rastzunge
- 34: Nut
- 34.1: erster Nutabschnitt
- 34.2: zweiter Nutabschnitt
- 35: Anschlusskontur
- 36: Auflauffläche
- 37: Ventilator
- 38: Flüssigkeitsverteilquerschnitt
- 39: Wassersammelwanne
- 40: Schalldämpfer
- 41: Schalldämpfer

- H: Sprühhöhe
- D: Sprühkegeldurchmesser

## Patentansprüche

1. Fluidkühleinrichtung für insbesondere Kühltürme (19), mit einer Flüssigkeitsverteileinrichtung (28), die eine Mehrzahl von an einem Zulaufrohr (23) angeschlossenen Verteilerrohren (24) aufweist, die mit tangential angesetzten Vollkegeldüsen (1) ausgerüstet sind, wobei eine jede Vollkegeldüse (1) ein Düsengehäuse (2), das eine rotationssymmetrisch ausgebildete Düsenkammer (5) bereitstellt, einen in die Düsenkammer (5) einmündenden Anschlussstutzen (4), einen der Düsenkammer (5) in Strömungsrichtung nachgeordneten und eine Austrittsöffnung (15) definierenden Düsenmund (6) aufweist wobei der Anschlussstutzen (4) zur Rotationshochachse (9) der Düsenkammer (5) im rechten Winkel und versetzt hierzu ausgerichtet ist und wobei die Austrittsöffnung (15) in Richtung auf den Anschlussstutzen (4) versetzt zur Rotationshochachse (9) der Düsenkammer (5) ausgebildet ist, aufweit einen Gehäusedeckel (3) für die Düsenkammer (5) aufweist, wobei der Gehäusedeckel (3) auf seiner der Düsenkammer (5) zugewandten Innenseite in die Düsenkammer (5) hineinragende Fortsätze (14) trägt **dadurch gekennzeichnet, dass** jede Vollkegeldüse.

2. Einrichtung nach Anspruch 1, **dadurch gekennzeichnet, dass** das Düsengehäuse (2) und der Anschlussstutzen (4) einer jeden Vollkegeldüse (1) einstückig ausgebildet sind und aus Kunststoff bestehen.

3. Einrichtung nach Anspruch 1, **dadurch gekennzeichnet, dass** die Fortsätze (14) im Querschnitt dreieckförmig ausgebildet sind.

4. Einrichtung nach Anspruch 1, **dadurch gekennzeichnet, dass** die innenseitig des Gehäusedeckels (3) vorgesehenen Fortsätze (14) abstandsgleich zueinander angeordnet sind.

5. Einrichtung nach Anspruch 4, **dadurch gekennzeichnet, dass** der Abstand zwischen zwei benachbarten Fortsätzen (14) 10mm bis 30mm, vorzugsweise 15mm bis 25mm, mehr bevorzugt 18mm bis 23mm, noch mehr bevorzugt 20mm bis 21 mm beträgt.

6. Einrichtung nach Anspruch 1, **dadurch gekennzeichnet, dass** die Vollkegeldüsen innenseitig eine Oberflächenrauheit von 1 µm bis 12 µm, vorzugsweise von 5 µm bis 10 µm aufweisen.

7. Einrichtung nach Anspruch 1, **dadurch gekennzeichnet, dass** die Vollkegeldüsen (1) unter jeweiliger Zwischenordnung eines Adapters (30) an die Verteilerrohre (24) angeschlossen sind.

8. Einrichtung nach Anspruch 7, **dadurch gekennzeichnet, dass** der Adapter (30) als Anschlussring (31) ausgebildet ist, der verteilerrohrseitig einen Absatz (32) mit Rastzungen (33) aufweist.

9. Einrichtung nach Anspruch 7 oder 8, **dadurch gekennzeichnet, dass** der Absatz (32) in seiner Anschlusskontur an den Rohrdurchmesser des zugehörigen Verteilerrohres (24) angepasst ist.

10. Einrichtung nach Anspruch 7, 8 oder 9, **dadurch gekennzeichnet, dass** der Adapter (30) fußseitig der Rastzungen (33) eine umlaufende Nut (34) aufweist.

11. Einrichtung nach Anspruch 10, **dadurch gekennzeichnet, dass** die Nut (34) einen ersten Nutabschnitt (34.1) und einen zweiten Nutabschnitt (34.2) aufweist.

12. Einrichtung nach Anspruch 1, **dadurch gekennzeichnet, dass** die Verteilerrohre (24) in gleichen Abständen zueinander ausgerichtet sind und dass sich die daran in gleichen Abständen wie die Verteilerrohre (24) zueinander angeordneten Vollkegeldüsen (1) in ihren jeweiligen Sprühbildern (25) zu einem weitestgehend vergleichmäßigten Gesamtsprühbild vereinen.

13. Einrichtung nach Anspruch 1, **dadurch gekennzeichnet, dass** die Vollkegeldüsen (1) in einer Sprühhöhe (H) von 400 mm bis 1.000 mm, vorzugsweise von 500 mm bis 900mm, mehr bevorzugt von 550mm bis 700mm, noch mehr bevorzugt 600mmm bis 650mm oberhalb eines Flüssigkeitsverteilquerschnittes (38) angeordnet sind.

14. Einrichtung nach Anspruch 1, **dadurch gekennzeichnet, dass** die Vollkegeldüsen (1) einen Sprühkegeldurchmesser (D) von 500 mm bis 1.200 mm, vorzugsweise von 700 mm bis 1.000 mm, mehr bevorzugt von 750 mm bis 850 mm erzeugen.

## Claims

1. A fluid cooling system for in particular cooling towers (19), with a liquid distribution system (28) comprising a plurality of distributor pipes (24) connected to a feed pipe (23), said distributor pipes being provided with full cone nozzles (1) which are tangentially attached, wherein each full cone nozzle (1) comprises a nozzle housing (2) which has a rotation-symmetrically configured nozzle chamber (5), a connecting piece (4) opening into the nozzle chamber (5), a nozzle mouth (6) which is located downstream of the nozzle chamber (5) and defines an outlet port (15), wherein the connecting piece (4) is positioned at a right angle relative to the rotational vertical axis (9) of the nozzle chamber (5) and is offset relative thereto and wherein the outlet port (15) is offset relative to the rotational vertical axis (9) of the nozzle chamber (5) in a direction toward the connecting piece (4), **characterised in that** each full cone nozzle comprises a housing lid (3) for the nozzle chamber (5), wherein the housing lid (3) carries extensions (14) on its inner side facing the nozzle chamber (5), said extensions projecting into the nozzle chamber (5).

2. The system according to claim 1, **characterised in that** the nozzle housing (2) and the connecting piece (4) of each full cone nozzle (1) are formed as one piece and are made of plastic.

3. The system according to claim 1, **characterised in that** the extensions (14) have a triangular cross-section.

4. The system according to claim 1, **characterised in that** the extensions (14) provided on the inside of the housing lid (3) are positioned so as to have the same distance from each other.

5. The system according to claim 4, **characterised in that** the distance between two adjacent extensions (14) amounts to 10 mm to 30 mm, preferably 15 mm to 25 mm, more preferably 18 mm to 23 mm, still more preferably 20 mm to 21 mm.

6. The system according to claim 1, **characterised in that** the full cone nozzles have a surface roughness on the inside from 1 µm to 12 µm, preferably 5 µm to 10 µm.

7. The system according to claim 1, **characterised in that** the full cone nozzles (1) are connected to the distributor pipes (24) with the respective interposition of an adapter (30).

8. The system according to claim 7, **characterised in that** the adapter (30) is formed as a connecting ring (31) comprising a shoulder (32) with locking tabs (33) on a side facing the distributor pipe.

9. The system according to claim 7 or 8, **characterised in that** the shoulder (32) as adapted in its connection contour to the pipe diameter of the respective distributor pipe (24).

10. The system according to claim 7, 8 or 9, **characterised in that** the adapter (30) comprises a circumferential groove (34) in the foot area of the locking tabs (33).

11. The system according to claim 10, **characterised in that** the groove (34) comprises a first groove section (34.1) and a second groove section (34.2).

12. The system according to claim 1, **characterised in that** the distributor pipes (24) are aligned at equal distances from each other and that the full cone nozzles (1) arranged thereon at the same distances from one another as the distributor pipes (24) unite in their spray patterns (25) to form an overall spray pattern which is for the most part rendered uniform.

13. The system according to claim 1, **characterised in that** the full cone nozzles (1) are arranged at a spray height (H) of 400 mm to 1000 mm, preferably 500 mm to 900 mm, more preferably 550 mm to 700 mm, still more preferably 600 mm to 650 mm above a liquid distribution cross-section (38).

14. The system according to claim 1, **characterised in that** the full cone nozzles (1) produce a spray cone diameter (D) of 500 to 1200 mm, preferably 700 mm to 1000 mm, more preferably 750 mm to 850 mm.

## Revendications

1. Dispositif de refroidissement de fluide en particulier pour tours de refroidissement (19) avec un système de distribution de liquide (28), présentant une pluralité de conduits distributeurs (24) raccordés à un conduit d'arrivée (23), équipés de buses coniques intégrales (1) appliquées de façon tangentielle, chacune des buses coniques intégrales (1) présentant un carter de buse (2) mettant à disposition une chambre de buse constituée en symétrie de révolution, un raccord (4) aboutissant dans la chambre de buse (5), une embouchure de buse (6) subordonnée à ladite chambre de buse (5) dans le sens d'écoulement et définissant une ouverture de sortie (15), ledit raccord (4) étant orienté à cet effet à angle droit et décalé par rapport à l'axe vertical de rotation (9) de la chambre de buse (5) et une ouverture de sortie (15) étant formée en direction du raccord (4) décalée par rapport à l'axe vertical de rotation (9) de la chambre de buse (5), **caractérisé en ce que** chaque buse conique intégrale présente un couvercle de carter (3) pour la chambre de buse (5), ledit couvercle de buse (3) portant sur sa face intérieure tournée vers la chambre de buse (5) des prolongements (14) avançant dans la chambre de buse (5).

2. Dispositif selon la revendication 1 **caractérisé en ce que** le carter de buse (2) et le raccord (4) de chacune des buses coniques intégrales (1) sont formés de façon monobloc et sont en matière plastique.

3. Dispositif selon la revendication 1 **caractérisé en ce que** les prolongements (14) sont constitués dans la section en forme triangulaire.

4. Dispositif selon la revendication 1 **caractérisé en ce que** les prolongements (14) prévus à l'intérieur du couvercle de carter (3) sont disposés à la même distance les uns des autres.

5. Dispositif selon la revendication 4 **caractérisé en ce que** l'intervalle entre deux prolongements (14) voisins est de 10 mm à 30 mm, de préférence 15 mm à 25 mm, de façon plus préférée 18 mm à 23 mm, et de façon encore plus préférée de 20 mm à 21 mm.

6. Dispositif selon la revendication 1 **caractérisé en ce que** les buses coniques intégrales présentent à l'intérieur une rugosité de surface de 1µm à 12 µm, de préférence de 5 µm à 10 µm.

7. Dispositif selon la revendication 1 **caractérisé en ce que** les buses coniques intégrales (1) sont raccordées aux conduits distributeurs (24) en intercalant respectivement un adaptateur (30).

8. Dispositif selon la revendication 7 **caractérisé en ce que** l'adaptateur (30) est constitué sous la forme d'une couronne de raccordement (31) qui présente du côté du conduit distributeur un décrochement (32) avec des languettes de verrouillage (33).

9. Dispositif selon la revendication 7 ou 8 **caractérisé en ce que** le décrochement (32) est adapté dans son profil de raccordement au diamètre de conduit du conduit distributeur (24) correspondant.

10. Dispositif selon la revendication 7, 8 ou 9 **caractérisé en ce que** l'adaptateur (30) présente une rainure périphérique au pied des languettes de verrouillage (33).

11. Dispositif selon la revendication 10 **caractérisé en ce que** la rainure (34) présente un premier segment de rainure (34.1) et un deuxième segment de rainure (34.2).

12. Dispositif selon la revendication 1 **caractérisé en ce que** les conduits distributeurs (24) sont orientés à de mêmes intervalles les uns par rapport aux autres et **en ce que** les buses coniques intégrales (1) disposées à intervalles égaux entre elles comme les conduits distributeurs (24) se réunissent dans leurs champs de pulvérisation (25) respectifs en un champ général de pulvérisation largement comparable.

13. Dispositif selon la revendication 1 **caractérisé en ce que** les buses coniques intégrales (1) sont disposées à une hauteur de pulvérisation (H) de 400 mm à 1000 mm, de préférence de 500 mm à 900 mm, de façon plus préférée de 550 mm à 700 mm, de façon encore plus préférée de 600 mm à 650 mm au-dessus d'une section de distribution de liquide (38).

14. Dispositif selon la revendication 1 **caractérisé en ce que** les buses coniques intégrales (1) génèrent un diamètre conique de pulvérisation (D) de 500 mm à 1200 mm, de préférence de 700 mm à 1000 mm, de façon plus préférée de 750 mm à 850 mm.
